# EUROPÄISCHE PATENTANMELDUNG

(11) **EP 2 562 896 A2**
(43) Veröffentlichungstag der Anmeldung: **27.02.2013**
(21) Anmeldenummer: 12179212.1
(22) Anmeldetag: 03.08.2012
(51) Int. Cl.: H02H 9/02

(54) **Steuerschaltung zur Begrenzung eines Laststroms, Ladeschaltung und Kraftfahrzeug**

(30) Priorität: 23.08.2011 US 201161526329 P; 11.11.2011 EP 11188801
(71) Anmelder: Magna E-Car Systems GmbH & Co OG, 8041 Graz (AT)
(72) Erfinder: Erhart, Michael, 8075 Hart bei Graz (AT)
(74) Vertreter: Rausch, Gabriele

(57) **Zusammenfassung**

Unter einem ersten Aspekt ist eine erste Steuerschaltung (12) zur mittelbaren Begrenzung eines Laststroms (l₁), der durch ein steuerbares Halbleiterbauelement (31) fließt, dazu vorbereitet, ein steuerbares Halbleiterbauelement (31) unter Berücksichtigung einer gemessenen und/oder berechneten laststromabhängigen Verlustleistung (Pᵢₛₜ) des Halbleiterbauelements (31) zu steuern. Unter einem zweiten Aspekt ist eine zweite Steuerschaltung (12) zur mittelbaren Begrenzung eines Laststroms (l₁), der durch ein steuerbares Halbleiterbauelement (31) fließt, dazu vorbereitet, ein steuerbares Halbleiterbauelement (31) unter Berücksichtigung einer gemessenen und/oder berechneten laststromabhängigen Bauelementetemperatur (T) des steuerbaren Halbleiterbauelements (31) zu steuern. Eine Ladeschaltung (10) mit einem steuerbaren Halbleiterbauelement (31) zur Begrenzung eines Laststroms (l₁) umfasst eine erfindungsgemäße Steuerschaltung (12). Ein Kraftfahrzeug umfasst ein elektrisches Bordnetz (11) mit einer erfindungsgemäßen Ladeschaltung (10).

## Beschreibung

Die Erfindung betrifft eine erste und eine zweite Steuerschaltung zur mittelbaren Begrenzung eines Laststroms, der durch ein steuerbares Halbleiterbauelement fließt. Die Begrenzung des Laststroms wird hier als mittelbare Begrenzung bezeichnet, weil sie mittels eines steuerbaren Halbleiterbauelements durchgeführt wird, das nicht zwingend Teil der Steuerschaltung ist.

Außerdem betrifft die Erfindung eine Ladeschaltung, die ein steuerbares Halbleiterbauelement zur Begrenzung eines Laststroms umfasst.

Darüberhinaus betrifft die Erfindung ein Kraftfahrzeug mit einem elektrischen Bordnetz.

Die elektrische Vorladung eines Zwischenkreises wird üblicherweise über einen zugeschalteten Widerstand durchgeführt. Bisher wurden für die Hauptschalter Relays verwendet. Zukünftig werden statt der Relays verstärkt elektronische Schalter verwendet.

Aus DE 195 46 132 A1 ist eine Ladeschaltung bekannt, die einen Einschaltstrom wird mittels eines Halbleiterbauelements (z.B. MOSFET) begrenzt. Nach dem Einschalten beaufschlagt ein zeitbestimmendes RC-Glied einer Steuerschaltung ein Gate des Halbleiterbauelements mit einer Gate-Spannung, die das Halbleiterbauelement in einen Linearbetrieb führt. Erst nach einer Verzögerungszeit, die von der Zeitkonstante des RC-Glieds abhängig ist, wird das Halbleiterbauelement von dem RC-Glied mit einer Gate-Spannung beaufschlagt, die das Halbleiterbauelement durchsteuert.

Die vorliegende Erfindung hat das Ziel, eine Ladeschaltung und eine Steuerschaltung für eine Ladeschaltung bereitzustellen, mit der eine Ladezeit verkürzt werden kann. Darüberhinaus ist es eine Aufgabe ein Kraftfahrzeug bereitzustellen, dessen Bordnetz eine Ladeschaltung mit einer verkürzten Ladezeit aufweist. Insbesondere ist es bevorzugt, die Ladezeit ohne Änderung des Halbleiterbauelements zu verkürzen.

Diese Aufgabe wird mit den unabhängigen Patentansprüchen gelöst. Vorteilhafte Weiterbildungen des Erfindungsgedankens sind Gegenstand der Unteransprüche.

Erfindungsgemäß ist die bekannte Steuerschaltung zur mittelbaren Begrenzung eines Laststroms unter einem ersten Aspekt dadurch weitergebildet, dass die Steuerschaltung dazu vorbereitet ist, das steuerbare Halbleiterbauelement unter Berücksichtigung einer gemessenen und/oder berechneten laststromabhängigen Verlustleistung des Halbleiterbauelements zu steuern. Hierdurch ist es möglich, das Halbleiterbauelement beim Ladevorgang (unter Berücksichtigung eines ausreichenden Sicherheitsabstandes im Kennlinienfeld) entlang seiner differenzspannungsabhängigen Wärmebelastbarkeitsgrenze zu führen.

Unter einem zweiten Aspekt ist die bekannte Steuerschaltung zur mittelbaren Begrenzung eines Laststroms dadurch weitergebildet, dass die Steuerschaltung dazu vorbereitet ist, ein steuerbares Halbleiterbauelement unter Berücksichtigung einer gemessenen und/oder berechneten laststromabhängigen Bauelementetemperatur des steuerbaren Halbleiterbauelements zu steuern. Hierdurch ist es möglich, das Halbleiterbauelement beim Ladevorgang (unter Berücksichtigung eines ausreichenden Sicherheitsabstandes) entlang seiner differenzspannungsabhängigen Temperaturbelastbarkeitsgrenze zu führen.

Die Steuerschaltung kann dazu vorbereitet sein, das steuerbare Halbleiterbauelement unter Berücksichtigung einer Kühlmitteltemperatur des steuerbaren Halbleiterbauelements zu steuern. Das Kühlmittel kann beispielsweise ein Fluid (Gas und/oder Flüssigkeit) oder ein Kühlkörper sein. Durch die Berücksichtigung der Kühlmitteltemperatur kann eine Überhitzung eines Kühlmittels vermieden werden, das der Verteilung und/oder dem Abtransport einer von dem Halbleiterbauelement erzeugten Wärmeenergie dient.

Auch die unter dem zweiten Aspekt weitergebildete Steuerschaltung kann dazu vorbereitet sein, das steuerbare Halbleiterbauelement unter Berücksichtigung einer gemessenen und/oder berechneten laststromabhängigen Verlustleistung des steuerbaren Halbleiterbauelements zu steuern. Hierdurch ist es möglich, das Halbleiterbauelement beim Ladevorgang (unter Berücksichtigung eines ausreichenden Sicherheitsabstandes im Kennlinienfeld) entlang seiner differenzspannungsabhängigen Wärmebelastbarkeitsgrenze zu führen.

Die Steuerschaltung kann dazu vorbereitet sein, eine Ladezeit für eine Ladungsmenge zu minimieren. Hierdurch kann eine Wartezeit verkürzt werden, bis ein Verbraucher in Betrieb genommen werden kann, der an einer Ladeschaltung angeschlossen ist, die mittels der Steuerschaltung gesteuert wird.

Die Steuerschaltung kann dazu vorbereitet sein, für eine Ladungsmenge einen durch das Laden verursachten ohmschen Gesamtverlust zu minimieren. Hierdurch wird der Verbrauch und der Bedarf an elektrischer Energie minimiert.

Die Steuerschaltung kann dazu vorbereitet sein, für eine Ladungsmenge das Produkt aus einem durch das Laden der Ladungsmenge verursachten ohmschen Gesamtverlust und einer Ladezeit für die Lademenge zu minimieren. Hierdurch wird ein Kompromiss zwischen Ökonomie und Minimierung der Ladezeit erreicht.

Die Steuerschaltung kann dazu vorbereitet sein, das steuerbare Halbleiterbauelement unter Berücksichtigung eines sicheren Arbeitsbereichs des steuerbaren Halbleiterbauelements zu steuern. Der sichere Arbeitsbereich eines Leistungshalbleiterbauelements ist typischerweise durch eine Stromstärkengrenze (*current limit*), eine thermische Grenze (*thermal limit*) und eine Durchbruchsgrenze zweiter Art (*secondary breakdown limit*) begrenzt. Durch die Berücksichtigung des sicheren Arbeitsbereichs kann bei der Steuerung des Halbleiterbauelements neben der thermischen Grenze auch eine Stromstärkengrenze und/oder eine Durchbruchsgrenze zweiter Art berücksichtigt werden und eine Überlastung des Halbleiterbauelements vermieden werden. Optional kann zur besseren Nutzung der Fähigkeiten des Halbleiterbauelements vorgesehen sein, dass das Halbleiterbauelement kurzzeitig vorübergehend mit einer höheren Verlustleistung und/oder einer höheren Stromstärke betrieben wird als im Dauerbetrieb zulässig wäre.

Die Steuerschaltung kann dazu vorbereitet sein, in der Steuerung des steuerbaren Halbleiterbauelements eine Temperaturabhängigkeit des sicheren Arbeitsbereichs des steuerbaren Halbleiterbauelements zu berücksichtigen. Hierdurch kann der sichere Arbeitsbereich bei unterschiedlichen Betriebstemperaturen bestmöglich genutzt werden, obwohl seine Grenzen von der Betriebstemperatur abhängig sind.

Die Steuerschaltung kann dazu vorbereitet sein, das steuerbare Halbleiterbauelement zumindest zeitweise in einem Sättigungsbereich und/oder in einem linearen Arbeitsbereich des steuerbaren Halbleiterbauelements anzusteuern. Bei höheren Differenzspannungen wird das Halbleiterbauelement typischerweise im Sättigungsbereich betrieben. Die Drain-Source-Strecke eines Feldeffekttransistors verhält sich im Sättigungsbereich näherungsweise wie eine Konstantstromquelle, deren Stromstärke mittels der Gate-Source-Spannung einstellbar ist. Wenn das Halbleiterbauelement ein n-Kanal-FET (n-Kanal-Feldeffektransistor) ist und wenn der Betrag der Differenzspannung kleiner ist als der Betrag der Abschnürspannung, wird das Halbleiterbauelement in einem Bereich betrieben, der als 'ohmscher Bereich' oder als 'linearer Bereich' bezeichnet wird. Wenn das Halbleiterbauelement ein Feldeffekttransistor ist, durchläuft es zum Ende des Ladevorgangs, also zum Schluss des Abbaus der Differenzspannung, den ohmschen Bereich.

Die Steuerschaltung kann dazu vorbereitet sein, zur Ansteuerung des steuerbaren Halbleiterbauelements einen ersten Betriebsparameter für jede von mindestens zwei Ansteueralternativen vorauszuberechnen und in Abhängigkeit der vorausberechneten Werte des ersten Betriebsparameters aus den mindestens zwei Ansteueralternativen eine Ansteueralternative auszuwählen und in einer Ansteuerung des steuerbaren Halbleiterbauelements anzuwenden. Durch Iterationsschritte kann der Ladevorgang damit auch dann optimiert werden, wenn die zugrundeliegende Optimierungsaufgabe analytisch nicht lösbar ist.

Die Steuerschaltung kann dazu vorbereitet sein, das steuerbare Halbleiterbauelement unter Berücksichtigung einer Kennlinie anzusteuern, der für aktuelle gemessene und/oder berechnete Werte eines zweiten Betriebsparameters jeweils ein anzuwendender Wert eines dritten Betriebsparameters entnehmbar ist. Durch vorbereitenden Aufbau und Speicherung einer solchen Kennlinie in die Steuerschaltung (insbesondere in einer Führungsgrößenberechnungskomponente der Steuerschaltung) können rechenintensive Optimierungsberechnungen im Entwicklungslabor durchgeführt werden. Die Kennlinie kann in vielen Ladegeräten verwendet werden, wodurch im laufenden Einsatz Energie für Neuberechnungen gespart wird. Jeder der drei Betriebsparameter kann ein Vektor sein, der aus mehreren Betriebsparametern zusammengesetzt ist, wobei der Vektor insbesondere eine Temperatur- und/oder Leistungsangabe umfasst.

Die bekannte elektronische Ladeschaltung ist dadurch weitergebildet, dass sie eine erfindungsgemäße Steuerschaltung umfasst. Hierdurch werden die Vorteile der erfindungsgemä-βen Steuerschaltung für eine Ladeschaltung nutzbar.

Das bekannte Kraftfahrzeug ist dadurch weitergebildet, dass das Bordnetz des Kraftfahrzeugs eine erfindungsgemäße Ladeschaltung umfasst. Hierdurch werden die Vorteile der erfindungsgemäßen Ladeschaltung für ein Kraftfahrzeug nutzbar.

Die Erfindung wird nachfolgend anhand von Ausführungsbeispielen näher erläutert, die in den schematischen Zeichnungen dargestellt sind. Es zeigen:
- Fig. 1: ein schematisches Blockschaltbild einer Ausführungsform einer erfindungsgemäßen Ladeschaltung;
- Fig. 2: schematische Blockdiagramme mit drei möglichen funktionalen Strukturen der Steuerungsschaltung;
- Fig. 3: ein schematisches Kennlinienfeld eines n-Kanal-FET mit Arbeitsbereichsgrenzen und einer Verlaufskurve für einen Betriebspunkt des n-Kanal-FET in der Ladeschaltung (Fig. 3a) sowie eine Kennlinie zur Berechnung einer Gate-Source-Spannung am ersten Halbleiterbauelement in Abhängigkeit von einer Spannungsdifferenz am ersten Halbleiterbauelement (Fig. 3b);
- Fig. 4: ein schematisches Ablaufdiagramm eines Inbetriebnahmeverfahrens einer Anordnung aus einer Spannungsquelle, einer Ladeschaltung und einer Zwischenkreiskapazität; und
- Fig. 5: das Kennlinienfeld der Fig. 3a mit einer Verlaufskurve für einen Betriebspunkt des n-Kanal-FET in der Ladeschaltung unter Berücksichtigung einer erhöhten Bauelementetemperatur des ersten Halbleiterbauelements (Fig. 5a) sowie eine Kennlinie zur Berechnung einer Gate-Source-Spannung am ersten Halbleiterbauelement in Abhängigkeit von einer Spannungsdifferenz am ersten Halbleiterbauelement (Fig. 5b).

In den Figuren werden für entsprechende Komponenten jeweils dieselben Bezugszeichen verwendet. Bezugszeichenbezogene Erläuterungen gelten daher figurenübergreifend, sofern sich aus dem Zusammenhang nichts anderes ergibt.

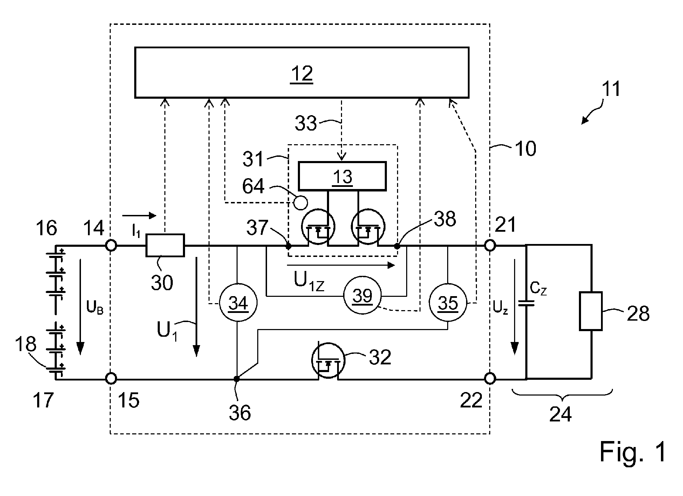

Die in Fig. 1 gezeigte Ausführungsform einer Ladeschaltung 10 eines Bordnetzes 11 umfasst eine Steuerschaltung 12, einen ersten 14 und einen zweiten 15 Versorgungsanschluss zum Anschluss eines Pluspols 16 beziehungsweise eines Minuspols 17 einer Spannungsquelle 18 (beispielsweise einer Kraftfahrzeugbatterie), sowie einen ersten 21 und einen zweiten 22 Verbraucheranschluss zum Anschluss einer elektrischen Last 24. Ein Beispiel für die Anwendung der Ladeschaltung 10 ist die Versorgung einer Zwischenkreiskapazität C_{Z} zur Versorgung eines Wechselrichters 28. Das Konzept der erfindungsgemäßen Ladeschaltung 10 eignet sich für Gleichstrom- und Wechselstromverbraucher 28, kann also unter anderem auch für eine Einschaltstrombegrenzung eines Transformators (siehe Rush-Effekt), eines Schaltnetzteils, einer Glühlampe oder einer elektronischen Baugruppe mit vielen Pufferkondensatoren (Tantal-Elektrolytkondensatoren) sowie für eine Anlaufstrombegrenzung eines Elektromotors angewendet werden. Aus Sicht der Ladeschaltung 10 besteht die elektrische Last 24 aus einer Zwischenkreiskapazität C_{Z} und einem dazu parallel geschalteten Verbraucher 28. Aus diesem Grund wird hier für den Strom I₁ der Begriff 'Laststrom' verwendet, welcher ein Oberbegriff zum 'Ladestrom' einer rein kapazitiven Last bildet.

Der erste Versorgungsanschluss 14 ist mit dem ersten Verbraucheranschluss 21 über eine Serienschaltung aus einem Stromsensor 30 zum Erfassen eines Laststroms I₁ und einem ersten Halbleiterbauelement 31 verbunden. Der zweite Versorgungsanschluss 15 ist über ein zweites Halbleiterbauelement 32 mit dem zweiten Verbraucheranschluss 22 verbunden. Alternativ kann der Stromsensor 30 auch in dem Leitungsabschnitt zwischen dem ersten Halbleiterbauelement 31 und dem ersten Verbraucheranschluss 21 oder zwischen dem zweiten Versorgungsanschluss 15 und dem zweiten Halbleiterbauelement 32 oder zwischen dem zweiten Halbleiterbauelement 32 und dem zweiten Verbraucheranschluss 22 angeordnet sein. Das erste 31 und zweite 32 Halbleiterbauelement umfasst jeweils vorzugsweise einen Feldeffekttransistor, der so in der Ladeschaltung 10 angeordnet ist, dass der Laststrom 10 durch die Source-Drain-Strecke (den Kanal) des Feldeffekttransistors fließt. Der Feldeffekttransistor ist vorzugsweise ein MOSFET, insbesondere bevorzugt ein selbstsperrender MOSFET und/oder ein n-Kanal-MOSFET.

Zur Steuerung des ersten 31 und zweiten 32 Halbleiterbauelements ist die Steuerschaltung 12 mittels mindestens je einer Steuerverbindung 33 mit dem ersten 31 und mit dem zweiten 32 Halbleiterbauelement verbunden. Außerdem umfasst die Steuerschaltung 12 mindestens einen Differenzspannungssensor 39 zur Erfassung einer Differenzspannung U_{1Z} an dem ersten Halbleiterbauelement 31. Als Differenzspannungssensor 39 kann auch ein Paar von Spannungssensoren 34, 35 vorgesehen sein, wobei ein erster Spannungssensor 34 eine erste Teilspannung U₁ eines ersten Anschlusses 37 des ersten Halbleiterbauelements 31 gegenüber einem Bezugspotential 36 erfasst und ein zweiter Spannungssensor 35 ein zweite Teilspannung U_{Z} eines zweiten Anschlusses 38 des ersten Halbleiterbauelements 31 gegenüber dem Bezugspotential 36 erfasst. Die Steuerschaltung 12 kann die an dem ersten Halbleiterbauelement 31 zu erfassende Differenzspannung U_{1Z} durch analoge und/oder numerische Bildung der Differenz U_{1Z} = (U₁ - U_{Z}) zwischen dem ersten U₁ und dem zweiten U_{Z} Spannungspotential ermitteln. Alternativ ist es möglich, die Differenzspannung U_{1Z} an dem ersten Halbleiterbauelement 31 mittels eines einzelnen Spannungssensors 39 durch direkte Messung der Differenzspannung U_{1Z} zwischen den beiden Anschlüssen 37, 38 des ersten Halbleiterbauelements 31 zu messen, wodurch sich die Messung der Differenzspannung U_{1Z} vereinfacht und die Messvorrichtung für die Differenzspannungsmessung ohne Herausführung eines weiteren Anschlusses vollständig in das erste Halbleiterbauelement 31 integriert werden kann und eine Fehlerakkumulation durch mehrere Messungen vermieden werden kann.

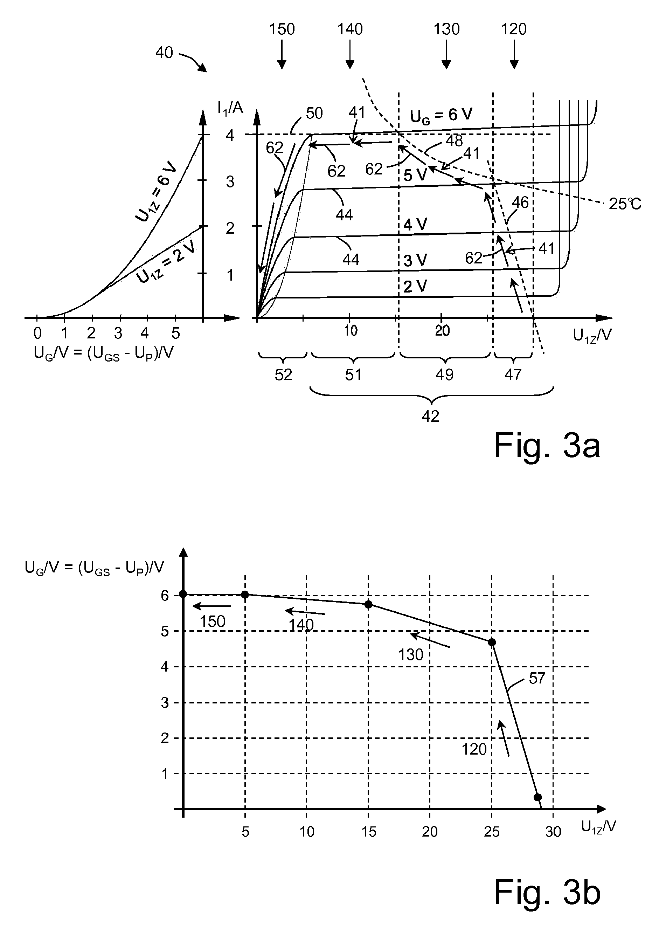

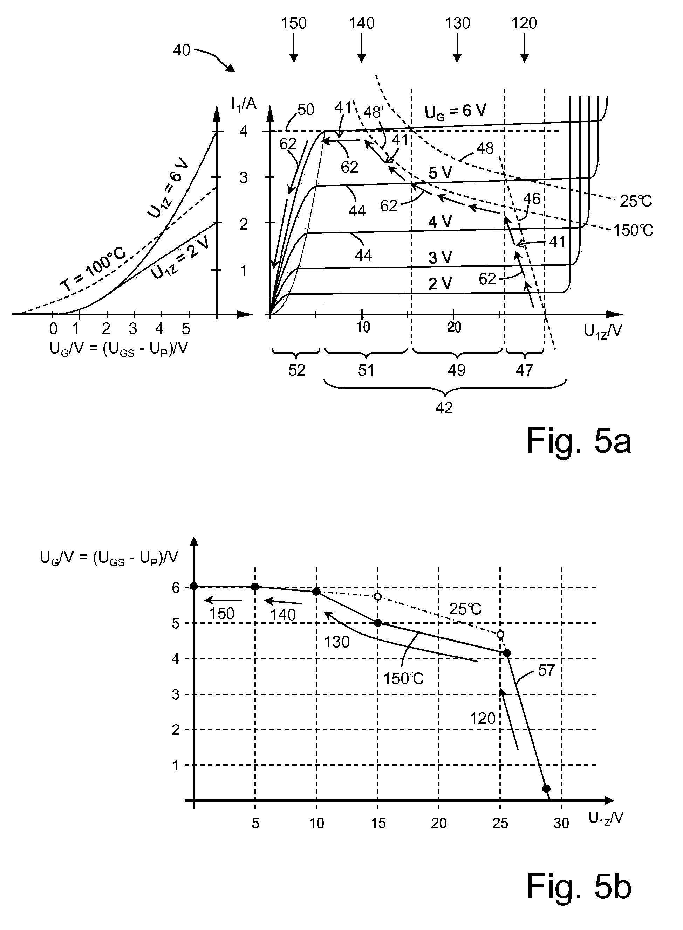

Zweck der Steuerschaltung 12 ist es, die elektronische Vorladung der Zwischenkreiskapazität C_{Z} mittels einer analogen Ansteuerung des ersten Halbleiterbauelements 31 (d.h. des zuletzt durchgeschalteten Hauptschalters) durchzuführen, wobei der Laststrom I₁ auf eine zeitlich veränderliche Zielgröße I₁ₛₒₗₗ geführt wird, die einer Verlustleistung Pₛₒₗₗ (Wärmeerzeugung pro Zeiteinheit) entspricht, die das Halbleiterbauelement 31 (unter Berücksichtigung eines Sicherheitsabstands 41, siehe Fig. 3a, 5a zur Berücksichtigung von Toleranzen) gerade noch mit Sicherheit zerstörungsfrei erzeugen und abführen kann. Die Fig. 3a und 5a zeigen Beispiele von Kennlinienfeldern 40, die sich im konkreten Anwendungsfall von dem Kennlinienfeld des Halbleiterbauelements 31 erheblich unterscheiden können. Die hier dargestellten erfindungsgemäßen Überlegungen sind dann in angepasster Form sinngemäß anzuwenden.

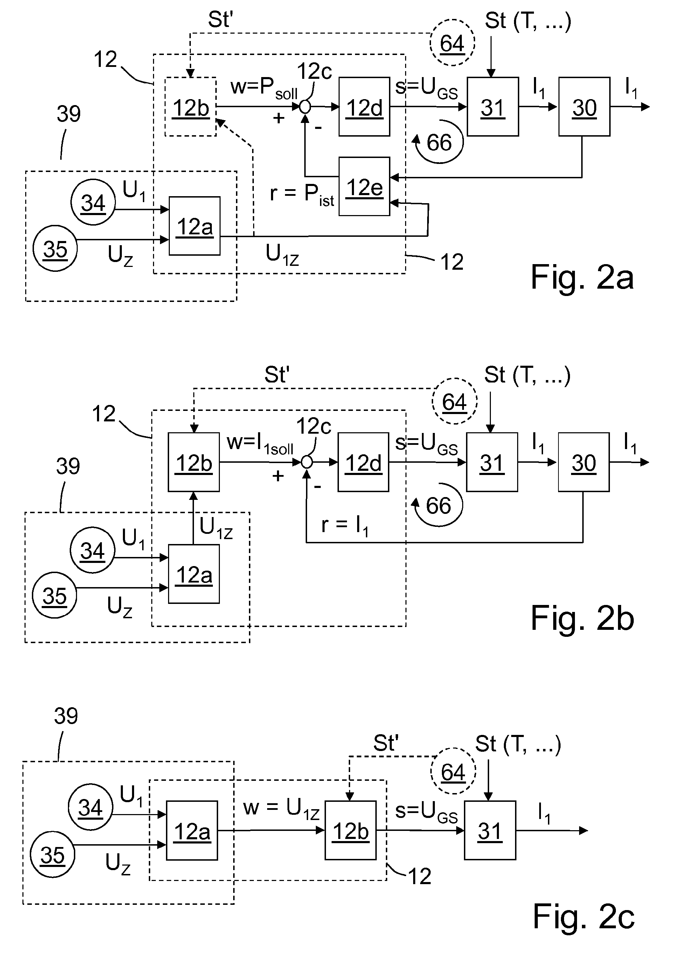

In der Ausführungsform der Fig. 2a ist die noch zulässige Verlustleistung Pₛₒₗₗ eine Führungsgröße w für einen Regelkreis 66, in dem die aktuelle Verlustleistung Pᵢₛₜ als Regelgröße r verwendet wird. In der Ausführungsform der Fig. 2b dient derjenige Laststrom I₁ₛₒₗₗ, der der noch zulässigen Verlustleistung Pₛₒₗₗ entspricht, als Führungsgröße w für einen Regelkreis 66 und der aktuelle Laststrom I₁ als Regelgröße r. In der Ausführungsform der Fig. 2c dient die Differenzspannung U_{1Z} als Führungsgröße w zum Berechnen oder Nachschlagen derjenigen Gate-Source-Spannung U_{GS}, die der noch zulässigen Verlustleistung Pₛₒₗₗ entspricht.

Die Fig. 2a zeigt eine erste Ausführungsform der Steuerungsschaltung 12, die eine Spannungsberechnungskomponente 12a, eine Verlustleistungsberechnungskomponente 12e, einen Differenzwertbilder 12c und einen Regler 12d umfasst. Über die beiden vor und hinter dem ersten Halbleiterbauelement 31 angeordneten Spannungssensoren 34, 35 werden die Teilspannungen U₁ und U_{Z} erfasst. Mittels der Spannungsberechnungskomponente 12a wird die am ersten Halbleiterbauelement 31 anliegende Differenzspannung U_{1Z} errechnet. So bildet die Spannungsberechnungskomponente 12a zusammen mit den Spannungssensoren 34, 35 einen Differenzspannungssensor 39. Alternativ oder zusätzlich kann die Spannung U_{1Z} zwischen den Anschlüssen 37 und 38 des Halbleiterbauelements 31 auch (ohne Umweg über das Bezugspotential 36) mit einem einzelnen Differenzspannungssensor 39 direkt erfasst werden. Der aktuelle Laststrom I₁ wird mittels eines (in der Regel ohnehin vorhandenen) Stromsensors 30 gemessen.

Über die so ermittelte Differenzspannung U_{1Z} und den so ermittelten aktuelle Laststrom I₁ wird in der Verlustleistungsberechnungskomponente 12e die aktuelle Verlustleistung Pᵢₛₜ = U_{1Z} * I₁ im Halbleiterbauelement 31 berechnet. Während der Hinzuschaltung des ersten Halbleiterbauelements 31 wird die Verlustleistung Pᵢₛₜ mit dem Regler 12d auf eine zulässige Verlustleistung Pₛₒₗₗ ausgeregelt. Hierbei bildet das Halbleiterbauelement 31 die Regelstrecke; und der Laststromsensor 30 bildet ein Messglied (d.h. einen Fühler) des Regelkreises 66. Die aktuelle Verlustleistung Pᵢₛₜ ist die Regelgröße r, und die Gate-Source-Spannung U_{GS} bildet die Stellgröße s des Regelkreises 66.

Nachdem die Zwischenkreisspannung U_{Z} die Spannung U_{B} der Spannungsquelle 18 angenommen hat, kann das erste Halbleiterbauelement 31 voll durchgesteuert werden. Durch Ausregelung der aktuellen Verlustleistung Pᵢₛₜ über das erste Halbleiterbauelement 31 auf die zulässige Verlustleistung Pₛₒₗₗ (auf den maximal zulässigen Energieeintrag), kann eine schnellere Vorladung als mit der konventionellen Vorladung erreicht werden. Im Vergleich zu einer Alternative mit einer getakteten Lösung wird in der Versorgungsleitung 61 keine Längsinduktivität benötigt, und es entstehen keine oder erheblich weniger EMV-Störungen als bei einer getakteten Lösung, so dass sich der Aufwand für besondere EMV-Maßnahmen gegen solche EMV-Störungen erübrigt.

In einer Weiterbildung der Erfindung kann die Tatsache berücksichtigt werden, dass die Höhe der zulässigen Verlustleistung Pₛₒₗₗ typischerweise von der Differenzspannung U_{1Z} am ersten Halbleiterbauelement 31 abhängig ist (siehe Fig. 3a). Sofern berücksichtigt werden soll, dass die zulässige Verlustleistung Pₛₒₗₗ von der Differenzspannung U_{1Z} abhängig ist, kann in der Steuerschaltung 12 eine Führungsgrößenberechnungskomponente 12b vorgesehen sein, mit der die zulässige Verlustleistung Pₛₒₗₗ (=Führungsgröße w) aus der Differenzspannung U_{1Z} berechnet wird. Weil die Führungsgrößenberechnungskomponente 12b eine Option ist, ist sie in der Fig. 2a gestrichelt gezeichnet. Die differenzspannungsabhängige maximal zulässige Verlustleistung Pₛₒₗₗ kann beispielsweise einem Kennlinienfeld 40 entnommen werden, wie es in den Fig. 3a und 5a gezeigt ist. Die Führungsgrößenberechnungskomponente 12b ist also eine Steuerung, die über die Führungsgröße w den Regelkreis für die Regelgröße r steuert.

In der in Fig. 2b gezeigten zweiten Ausführungsform der Steuerschaltung 12 wird der Laststrom I₁ durch das erste Halbleiterbauelement 31 ohne eine zwischengeschaltete Berechnung der Verlustleistung Pᵢₛₜ geregelt. Hierbei berechnet die Führungsgrößenberechnungskomponente 12b aus der Differenzspannung U_{1Z} einen Solllaststrom I₁ₛₒₗₗ als Führungsgröße w für den Regelkreis 66. Hier ist die aktuelle Stärke des Laststroms I1 die Regelgröße r; und die Gate-Source-Spannung U_{GS} die Stellgröße s des Regelkreises 66.

In der in Fig. 2c gezeigten dritten Ausführungsform der Steuerschaltung 12 wird der Laststrom I₁ durch das erste Halbleiterbauelement 31 in Abhängigkeit der Differenzspannung U_{1Z} gesteuert, jedoch nicht geregelt. Hierfür berechnet die Führungsgrößenberechnungskomponente 12b eine Gate-Source-Spannung U_{GS}, mit der das erste Halbleiterbauelement 31 einen Laststrom I₁ durchlässt, der der zulässigen Verlustleistung Pₛₒₗₗ und dem Solllaststrom I₁ₛₒₗₗ entspricht, die beziehungsweise der bei der aktuell vorliegenden Differenzspannung U_{1Z} zulässig ist. Für die dritte Ausführungsform der Steuerschaltung 12 sind Laststromsensor 30, Vergleicher 12c und Regler 12d nicht erforderlich. Wenn der Zusammenhang zwischen U_{1Z} und U_{GS} im Vorfeld berechnet oder experimentell ermittelt wurde, kann dieser Zusammenhang in der Führungsgrößenberechnungskomponente 12b als Kennlinie 57 (siehe Fig. 3b) gespeichert und zum Berechnen oder Nachschlagen der Gate-Source-Spannung s = D_{GS} aus der Differenzspannung w = U_{1Z} genutzt werden. Entsprechendes gilt für die Ermittlung der Führungsgröße w der Führungsgrößenberechnungskomponenten 12b der Ausführungsformen der Fig. 2a und 2b.

Die Regelstrecke 31 (siehe Fig. 2a, 2b) beziehungsweise die Steuerstrecke 31 (siehe Fig. 2c) wird durch Störgrößen St beeinflusst. Wie Fig. 5a zeigt, können die Störgrößen St einen Einfluss auf eine maximal zulässige Belastbarkeit des ersten Halbleiterbauelements 31 haben. Beispielsweise hat die Bauelementetemperatur T des ersten Halbleiterbauelements 31 einen Einfluss auf eine maximal zulässige Verlustleistung Pₛₒₗₗ des Halbleiterbauelements 31 (siehe Bezugszeichen 48, 48'). Um eine Störgröße St in der Berechnung der Führungsgröße w zu berücksichtigen, kann die Störgröße St mit einem Störgrößensensor (beispielsweise einem Temperatursensor 64) gemessen und der Störgrößenmesswert St' der Führungsgrößenberechnungskomponente 12b zugeführt werden, damit die Führungsgrößenberechnungskomponente 12b die Führungsgröße w so berechnet oder nachschlägt, dass der Einfluss der Störgröße St bei der Berechnung der Führungsgröße w berücksichtigt wird. Hierdurch kann erreicht werden, dass eine maximale Belastbarkeit des ersten Halbleiterbauelements 31 auch unter veränderten Randbedingungen (beispielsweise Temperaturbedingungen) möglichst weitgehend ausgenutzt wird, ohne dabei das Halbleiterbauelement 31 zu überlasten.

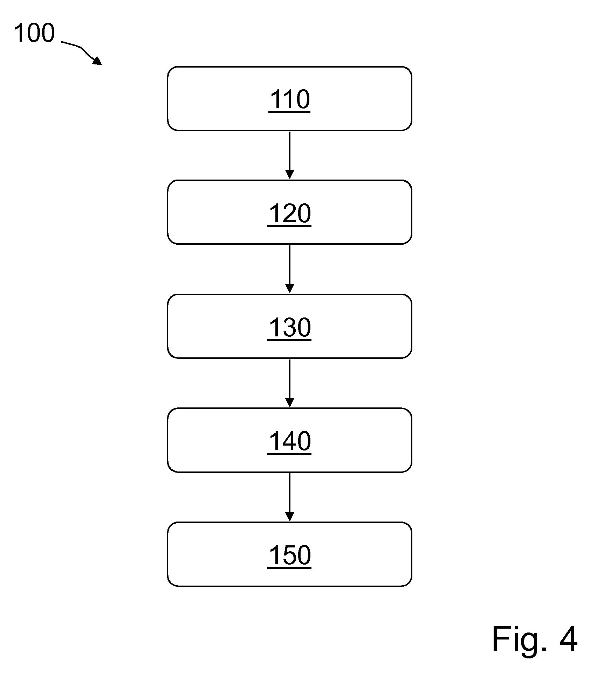

Im Folgenden wird am Beispiel eines n-Kanal-FET als erstes Halbleiterbauelement 31 betrachtet, wie ein Inbetriebnahmeverfahren an Eigenschaften des ersten Halbleiterbauelement 31 angepasst werden kann. Hierbei entspricht die Differenzspannung U_{1Z} einer Source-Drain-Spannung des FET. Die Fig. 3a zeigt ein Kennlinienfeld 40 eines n-Kanal-FET. Die Fig. 4 zeigt ein Ablaufdiagramm für eine Inbetriebnahme 100 der Anordnung 10, 18, C_{Z}, die folgenden Schritte umfasst:
In einem ersten Schritt 110 schaltet die Steuerschaltung 12 das zweite Halbleiterbauelement 32 auf Durchlass (die dazu notwendige Ansteuerung ist in den Figuren nicht dargestellt).
In einem zweiten Schritt 120 wird die Gate-Source-Spannung U_{GS} = Up + U_{G} schrittweise oder kontinuierlich über die Abschnürspannung U_{P} des FET hinaus erhöht (siehe Fig. 3b), so dass die Source-Drain-Strecke des ersten Halbleiterschalters 31 (ausgehend von einem näherungsweise unendlich hohen Widerstand) zunächst mit einem niedrigen Laststrom I₁ und dann mit immer größeren Strömen leitend wird (siehe Fig. 3a). Bei Inbetriebnahme der Anordnung 10, 18, C_{Z} aus Spannungsquelle 18, Ladeschaltung 10 und Zwischenkreiskapazität C_{Z} ist die Zwischenkreiskapazität C_{Z} typischerweise entladen. Deshalb ist zu Beginn des Leitend-Schaltens die Source-Drain-Spannung U_{1Z} noch fast so hoch wie die Spannung U_{B} der Spannungsquelle 18. Um die Leistungsfähigkeit des ersten Halbleiterbauelements 31 zu nutzen, ist es zweckmäßig, es zu Beginn der Inbetriebnahmephase im Sättigungsbereich 42 (*Abschnürbereich*) zu betreiben. Der nahezu waagerechte Verlauf der Kennlinien 44 im Abschnürbereich 42 zeigt, dass der Abschnürbereich 42 ein Arbeitsbereich ist, in dem sich der FET 31 näherungsweise wie eine Stromquelle verhält, deren Stromstärke I₁ mittels der Gate-Source-Spannung U_{GS} einstellbar ist. Im Abschnürbereich 42 besteht die Gefahr, dass der FET 31 zu stark erhitzt und beschädigt wird, wenn eine Stromstärkengrenze 150 (*current limit*), eine thermische Grenze 48 (*thermal limit*) oder eine Durchbruchsgrenze zweiter Art 46 (*secondary breakdown limit*) überschritten wird. Bei hoher Source-Drain-Spannung U_{1Z} bestimmt typischerweise zunächst die Durchbruchsgrenze zweiter Art 46 die maximal zulässige Stromstärke I₁ (siehe Fig. 3a). Daraus ergibt sich in diesem Teilarbeitsbereich 47 ein (typischerweise näherungsweise linearer) Zusammenhang für die maximal zulässige Gate-Source-Spannung U_{GS} in Abhängigkeit der Source-Drain-Spannung U_{1Z} (siehe Fig. 3b), damit der Laststrom I₁ durch den FET 31 nicht zu groß wird.

Beim Übergang vom zweiten 120 in den dritten 130 Schritt ist die Drain-Source-Spannung U_{1Z} durch das Aufladen der Zwischenkreiskapazität C_{Z} inzwischen so weit abgesunken, dass der FET 31 in einem Teilarbeitsbereich 49 betrieben wird, in welchem die thermische Grenze 48 die maximal zulässige Stärke des Laststroms I₁ₛₒₗₗ bestimmt. Daraus ergibt sich ein (typischerweise näherungsweise hyperbelförmiger) Zusammenhang für den maximal zulässigen Laststrom I₁ (siehe Fig. 3a) und für die maximal zulässige Gate-Source-Spannung U_{GS} (siehe Fig. 3b) in Abhängigkeit der Source-Drain-Spannung U_{1Z}, damit der Laststrom I₁ durch den FET 31 nicht zu groß wird.

Beim Übergang vom dritten 130 in den vierten 140 Schritt ist die Drain-Source-Spannung U_{1Z} durch das Aufladen der Zwischenkreiskapazität C_{Z} inzwischen noch weiter abgesunken, so dass der FET 31 in einem Teilarbeitsbereich 51 betrieben wird, in welchem die Stromstärkengrenze 50 diejenige Stärke des Laststroms I₁ₛₒₗₗ bestimmt, die gerade noch zulässig ist, damit der FET 31 nicht beschädigt wird (siehe Fig. 3a). Daraus wiederum ergibt sich die maximal zulässige Gate-Source-Spannung U_{GS} (siehe Fig. 3b), damit der Laststrom I₁ durch den FET 31 nicht zu groß wird.

Beim Übergang vom vierten 140 in den fünften 150 Schritt ist die Drain-Source-Spannung U_{1Z} durch das Aufladen der Zwischenkreiskapazität C_{Z} inzwischen noch weiter abgesunken, so dass der FET 31 im ohmschen Bereich 52 (sogenannten linearen Bereich) betrieben wird. Der Bereich 52 wird als 'ohmscher Bereich' bezeichnet, weil die Kennlinien 44 hier näherungsweise linear durch den Nullpunkt verlaufen, so dass sich der FET 31 hier wie ein ohmscher Widerstand verhält, dessen Widerstandswert durch die Gate-Source-Spannung U_{GS} steuerbar ist. Auch in diesem Bereich 52 bestimmt die Stromstärkengrenze 50 diejenige Laststromstärke I₁ₛₒₗₗ, die gerade noch zulässig ist, damit der FET 31 nicht beschädigt wird (siehe Fig. 3a). Je nach Typ des ersten Halbleiterbauelements 31 kann es auch im ohmschen Bereich 52 eine Gate-Source-Spannung U_{GS} geben, die nicht überschritten werden sollte.

Je nach Verlauf der Leistungsgrenzen 46, 48, 50 kann das Inbetriebnahmeverfahren 100 auch so angewendet werden, dass der zweite 120 und/oder der dritte 130 Verfahrensschritt übersprungen wird.

Durch das dargestellte Steuerungsverfahren 100 für das erste Halbleiterbauelement 31 kann der Laststrom I₁ über die verschiedenen Arbeitsbereiche 47, 49, 51, 52 hinweg so beeinflusst werden, dass er möglichst hoch ist, ohne ein zulässiges Maß zu überschreiten. Damit wird erreicht, das eine Leistungsfähigkeit und Belastbarkeit eines vorhandenen ersten Halbleiterbauelements 31 möglichst gut genutzt wird, ohne seine Funktionsfähigkeit zu gefährden. Mit der adaptiven Ausschöpfung der Laststromstärke I₁ₛₒₗₗ, die je nach Differenzspannung U_{1Z} maximal zulässig ist, wird bei Inbetriebnahme der Ladeschaltung 10 ein maximaler Ladungsfluss I₁ₛₒₗₗ zwischen Spannungsquelle 18 und Zwischenkreiskapazität C_{Z} erzielt und folglich eine bestmögliche Verkürzung des Ladevorgangs bis zum vollständigen Abbau der Spannungsdifferenz U_{1Z} zwischen Spannungsquelle 18 und Zwischenkreiskapazität C_{Z} erreicht. Die Steuerschaltung kann also das steuerbare Halbleiterbauelement 31 unter Berücksichtigung einer Kennlinie 57 ansteuern, der für aktuell gemessene und/oder berechnete Werte eines zweiten Betriebsparameters U_{1Z} jeweils ein anzuwendender Wert eines dritten Betriebsparameters U_{GS} entnehmbar ist.

Beim Ladevorgang ist eine definierte Gesamtladungsmenge Q = U_{B} * C_{Z} von der Spannungsquelle 18 zur Zwischenkreiskapazität C_{Z} zu befördern. Die Ladungsmenge Q entspricht einem Integral des Laststroms I1 über die Ladezeit. Deshalb ist die Ladezeit umso kürzer je höher die Laststromstärken I1 sind, die während des Ladevorgangs 100 auftreten. Da die "oberen" Kennlinien 44 im Kennlinienfeld 40 die höheren Stromstärken I1 repräsentieren, führt ein Durchlaufen von Kennlinien 44, die möglichst weit oben im Kennlinienfeld 40 liegen, zu einer maximalen zeitlichen Verkürzung des Ladevorgangs 100.

Aufgrund der Nichtlinearität der Kennlinien 44 und der Abhängigkeit des Kennlinienfeldes 40 von einer Bauelementetemperatur T des Halbleiterbauelements 31 kann es je nach Anwendung wünschenswert sein, durch Optimieren des Verlaufs der Verlaufskurve 62 für den Betriebspunkt des ersten Halbleiterbausteins 31 im Kennlinienfeld 40 beispielsweise eine Ladezeit oder einen durch den Ladevorgang verursachten ohmschen Gesamtverlust oder ein Produkt aus einem durch das Laden verursachten ohmschen Gesamtverlust und einer Ladezeit zu minimieren. Eine Weiterbildung der Steuerschaltung 10 sieht vor, dass sie eine solche Optimierungsgröße für mindestens zwei Ansteueralternativen w = w₁, w = w₂ vorausberechnet und in Abhängigkeit der vorausberechneten Werte der Optimierungsgröße aus den mindestens zwei Ansteueralternativen w₁, w₂ eine Ansteueralternative auswählt und in einer Ansteuerung des steuerbaren Halbleiterbauelements 31 anwendet.

Die in Fig. 5a gezeigte Verlaufskurve 62 für einen Betriebspunkt des n-Kanal-FET in der Ladeschaltung 10 berücksichtigt eine Veränderung der tolerierbaren maximalen Verlustleistung Pₛₒₗₗ aufgrund einer erhöhten Bauelementetemperatur T des ersten Halbleiterbauelements 31. Aufgrund der Verschiebung der thermischen Grenze von 48 in 48' sind in dem thermisch begrenzten Teilarbeitsbereich 49 nur noch niedrigere Laststromstärken I₁ₛₒₗₗ tolerierbar als in dem in Fig. 3a gezeigten Betrieb. Folglich ist bei einer Erhöhung der Bauelementetemperatur T des ersten Halbleiterbauelements 31 (bei unverändertem Halbleiterbauelement 31) eine Verlängerung der minimalen Ladezeit unvermeidbar. Der Teilarbeitsbereich 49 muss bei erhöhter Bauelementetemperatur T mit einer niedrigeren Gate-Source-Spannung U_{GS} durchlaufen werden (siehe Fig. 5b).

Außer der Veränderung der thermischen Grenze 48, verändern sich typischerweise auch die Kennlinien 44 und die anderen Grenzen 46, 50 durch eine Änderung der Bauelementetemperatur T des ersten Halbleiterbauelements 31. Dieser Sachverhalt ist in den Figuren nicht dargestellt (abgesehen davon, dass mit der gestrichelten Linie in dem linken Teildiagramm der Fig. 5a schematisch angedeutet ist, wie sich der Kanalstrom I₁ bei einer Erhöhung der Bauelementetemperatur typischerweise verändert). Diese Temperaturabhängigkeiten sollte bei der Berechnung der Führungsgröße w berücksichtigt werden. Dazu ist es zweckmäßig, in der Steuerschaltung 12 mehrere Kennlinienfelder 40 vorzusehen, von denen jedes das Verhalten des ersten Halbleiterbausteins 31 für eine andere Bauelementetemperatur T beschreibt. Insbesondere kann in der Führungsgrößenberechnungskomponente 12b ein (in den Figuren nicht dargestelltes) Kennlinienfeld mit mehreren Kennlinien 57 vorgesehen sein, von denen jede Kennlinie 57 jeweils für eine andere Bauelementetemperatur T die Führungsgröße w (in den Ausführungsformen der Fig. 2a und 2b) beziehungsweise die Stellgröße s (in der Ausführungsform der Fig. 2c) in Abhängigkeit der Differenzspannung U_{1Z} vorgibt.

Um aus den Kennlinienfeldern 40 und/oder aus dem Kennlinienfeld für die Kennlinien 57 das aktuell anzuwendende Kennlinienfeld 40 beziehungsweise die anzuwendende Kennlinie 57 auszuwählen, kann ein Temperatursensor 64 (siehe Fig. 1) vorgesehen sein, mittels dessen die Steuerschaltung 12 die aktuelle Bauelementetemperatur T des ersten Halbleiterbausteins 31 und/oder eine Kühlmitteltemperatur des ersten Halbleiterbausteins 31 erfassen kann. Alternativ ist es mit einem Temperaturmodell (beispielsweise einem thermischen Ersatzschaltbild) des ersten Halbleiterbausteins 31 auch vorstellbar, die aktuelle Temperatur T mit einem Bauelementetemperaturberechnungsmodul 64 anhand vorangegangener oder aktueller Belastungen durch Lastströme I₁ zu berechnen oder abzuschätzen.

Darüberhinaus kann zwecks Optimierung der Optimierungsgröße in der Steuerschaltung 12 (insbesondere in der Führungsgrößenberechnungskomponente 12b) auch die Tatsache berücksichtigt werden, dass das Halbleiterbauelement 31 kurzzeitig vorübergehend in der Regel mit einer deutlich höheren Verlustleistung und/oder einer höheren Stromstärke betrieben werden kann als im Dauerbetrieb.

Die beschriebenen Schaltungsprinzipien können auch mit umgekehrter Polung angewendet werden. Analoge und/oder digitale elektrische Signale, die in den Ausführungsbeispielen in Gestalt von Spannungen dargestellt sind, können alternativ oder zusätzlich auch als (eingeprägte) Ströme dargestellt werden. Mittels Verstärkern oder Wandlern können in der Beschreibung erwähnte Spannungen oder Ströme auf dem Weg von ihrer jeweiligen Quelle zu ihrer jeweiligen Senke umskaliert werden. Analoge oder digitale Signale, die in Gestalt von Spannungen oder Strömen dargestellt sind, können nach einem bekannten oder nach einem heute noch nicht bekannten Verfahren linear oder nichtlinear codiert sein. Beispiele für anwendbare Codierungsverfahren sind Pulsweitenmodulation und Pulscodemodulation. Die analogen und/oder digitalen Signale können elektrisch, optisch oder per Funk übertragen werden. Die analogen und/oder digitalen Signale können im Raummultiplex (also mittels unterschiedlicher Leitungen), im Zeitmultiplex oder im Codemultiplex übertragen werden. Die Übertragung der analogen und digitalen Signale kann über ein oder mehrere Bussysteme erfolgen. Beispielsweise kann der zweite Betriebsparameter neben der Spannungsdifferenz U_{1Z} auch eine Information über eine Bauelementetemperatur T des ersten Halbleiterbauelements 31 umfassen.

### Bezugszeichen:

- 10: Ladeschaltung
- 12: Steuerschaltung
- 12a: Differenzspannungsberechnungskomponente
- 12b: Führungsgrößenberechnungskomponente
- 12c: Vergleicher; Differenzwertbildner
- 12d: Regler
- 12e: Regelgrößenberechnungskomponente
- 13: Ansteuerung und Potentialtrennung
- 14: erster Versorgungsanschluss
- 15: zweiter Versorgungsanschluss
- 16: Pluspol der Spannungsquelle
- 17: Minuspol der Spannungsquelle
- 18: Spannungsquelle
- 21: erster Verbraucheranschluss
- 22: zweiter Verbraucheranschluss
- 24: elektrische Last
- 28: Wechselrichter; Verbrauer
- 30: Laststromsensor
- 31: erstes Halbleiterbauelement
- 32: zweites Halbleiterbauelement
- 33: Steuerverbindung
- 34: erster Spannungssensor
- 35: zweiter Spannungssensor
- 36: Bezugspotential
- 37: erster Anschluss des ersten Halbleiterbauelements
- 38: zweiter Anschluss des ersten Halbleiterbauelements
- 39: Differenzspannungssensor
- 40: Kennlinienfeld
- 41: Sicherheitsabstand
- 42: Sättigungsbereich (Abschnürbereich)
- 44: Kennlinie
- 46: Durchbruchsgrenze zweiter Art
- 47: Arbeitsbereich mit Durchbruchsgrenze zweiter Art
- 48: thermische Grenze
- 49: Arbeitsbereich mit thermischer Grenze
- 50: Stromstärkengrenze
- 51: Arbeitsbereich mit Stromstärkengrenze
- 52: ohmscher Bereich (linearer Bereich)
- 57: Kennlinie
- 61: Versorgungsleitung
- 62: Verlaufskurve für Betriebspunkt
- 64: Störgrößensensor, Temperatursensor; Temperaturberechnungsmodul
- 66: Regelkreis

- 100: Inbetriebnahmeverfahren
- 110: erster Schritt
- 120: zweiter Schritt
- 130: dritter Schritt
- 140: vierter Schritt
- 150: fünfter Schritt

- C_{Z}: Zwischenkreiskapazität
- I₁: Laststrom; Laststrom
- Pᵢₛₜ: gemessene oder berechnete Verlustleistung
- Pₛₒₗₗ: maximal zulässige Verlustleistung
- r: Regelgröße
- s: Stellgröße
- St: Störgröße
- St': Störgrößenmesswert
- T: Bauelementetemperatur
- U_{B}: Batteriespannung
- U_{G}: U_{GS} - U_{P}
- U_{GS}: Gate-Source-Spannung
- U_{P}: Abschnürspannung (*pinch-off voltage*)
- U_{Z}: Spannung hinter dem ersten Halbleiterbauelement
- U₁: Spannung vor dem ersten Halbleiterbauelement
- U_{1Z}: Differenzspannung; Spannungsabfall
- w: Führungsgröße
- w₁: erste Ansteueralternative
- w₂: zweite Ansteueralternative

## Patentansprüche

1. Steuerschaltung (12) zur mittelbaren Begrenzung eines Laststroms (I₁), der durch ein steuerbares Halbleiterbauelement (31) fließt, **dadurch gekennzeichnet, dass** die Steuerschaltung (12) dazu vorbereitet ist, ein steuerbares Halbleiterbauelement (31) unter Berücksichtigung einer gemessenen und/oder berechneten laststromabhängigen Verlustleistung (Pᵢₛₜ) des Halbleiterbauelements (31) zu steuern.

2. Steuerschaltung (12) zur mittelbaren Begrenzung eines Laststroms (I₁), der durch ein steuerbares Halbleiterbauelement (31) fließt, **dadurch gekennzeichnet, dass** die Steuerschaltung (12) dazu vorbereitet ist, ein steuerbares Halbleiterbauelement (31) unter Berücksichtigung einer gemessenen und/oder berechneten laststromabhängigen Bauelementetemperatur (T) des steuerbaren Halbleiterbauelements (31) zu steuern.

3. Steuerschaltung (12) nach Anspruch 2, **dadurch gekennzeichnet, dass** die Steuerschaltung (12) dazu vorbereitet ist, das steuerbare Halbleiterbauelement (31) unter Berücksichtigung einer Kühlmitteltemperatur des steuerbaren Halbleiterbauelements (31) zu steuern.

4. Steuerschaltung (12) nach Anspruch 2 oder 3, **dadurch gekennzeichnet, dass** die Steuerschaltung (12) dazu vorbereitet ist, das steuerbare Halbleiterbauelement (31) unter Berücksichtigung einer gemessenen und/oder berechneten laststromabhängigen Verlustleistung (Pᵢₛₜ) des steuerbaren Halbleiterbauelements (31) zu steuern.

5. Steuerschaltung (12) nach einem der Ansprüche 1 bis 4, **dadurch gekennzeichnet, dass** die Steuerschaltung (12) dazu vorbereitet ist, eine Ladezeit für eine Ladungsmenge zu minimieren.

6. Steuerschaltung (12) nach einem der Ansprüche 1 bis 4, **dadurch gekennzeichnet, dass** die Steuerschaltung (12) dazu vorbereitet ist, für eine Ladungsmenge einen durch das Laden verursachten ohmschen Gesamtverlust zu minimieren.

7. Steuerschaltung (12) nach einem der Ansprüche 1 bis 4, **dadurch gekennzeichnet, dass** die Steuerschaltung (12) dazu vorbereitet ist, für eine Ladungsmenge das Produkt aus einem durch das Laden der Ladungsmenge verursachten ohmschen Gesamtverlust und einer Ladezeit für die Lademenge zu minimieren.

8. Steuerschaltung (12) nach einem der Ansprüche 1 bis 7, **dadurch gekennzeichnet, dass** die Steuerschaltung (12) dazu vorbereitet ist, das steuerbare Halbleiterbauelement (31) unter Berücksichtigung eines sicheren Arbeitsbereichs (47, 49, 51, 52) des steuerbaren Halbleiterbauelements (31) zu steuern.

9. Steuerschaltung (12) nach Anspruch 8, **dadurch gekennzeichnet, dass** die Steuerschaltung (12) dazu vorbereitet ist, in der Steuerung des steuerbaren Halbleiterbauelements (31) eine Temperaturabhängigkeit des sicheren Arbeitsbereichs (47, 49, 51, 52) des steuerbaren Halbleiterbauelements (31) zu berücksichtigen.

10. Steuerschaltung (12) nach einem der Ansprüche 1 bis 9, **dadurch gekennzeichnet, dass** die Steuerschaltung (12) dazu vorbereitet ist, das steuerbare Halbleiterbauelement (31) zumindest zeitweise in einem Sättigungsbereich (42) und/oder in einem linearen Arbeitsbereich (52) des steuerbaren Halbleiterbauelements (31) anzusteuern.

11. Steuerschaltung (12) nach einem der Ansprüche 1 bis 10, **dadurch gekennzeichnet, dass** die Steuerschaltung (12) dazu vorbereitet ist, zur Ansteuerung des steuerbaren Halbleiterbauelements (31) einen ersten Betriebsparameter (r) für jede von mindestens zwei Ansteueralternativen (w₁, w₂) vorauszuberechnen und in Abhängigkeit der vorausberechneten Werte des ersten Betriebsparameters (r) aus den mindestens zwei Ansteueralternativen (w₁, w₂) eine Ansteueralternative auszuwählen und in einer Ansteuerung des steuerbaren Halbleiterbauelements (31) anzuwenden.

12. Steuerschaltung (12) nach einem der Ansprüche 1 bis 11, **dadurch gekennzeichnet, dass** die Steuerschaltung (12) dazu vorbereitet ist, das steuerbare Halbleiterbauelement (31) unter Berücksichtigung einer Kennlinie (57) anzusteuern, der für aktuelle gemessene und/oder berechnete Werte eines zweiten Betriebsparameters (U_{1Z}, T) jeweils ein anzuwendender Wert eines dritten Betriebsparameters (Pₛₒₗₗ; I₁ₛₒₗₗ; U_{GS}) entnehmbar ist.

13. Ladeschaltung (10), die ein steuerbares Halbleiterbauelement (31) zur Begrenzung eines Laststroms (I₁) umfasst, **dadurch gekennzeichnet, dass** die elektronische Ladeschaltung (10) eine Steuerschaltung (12) nach einem der Ansprüche 1 bis 12 umfasst.

14. Kraftfahrzeug mit einem elektrischen Bordnetz (11), **dadurch gekennzeichnet, dass** das Bordnetz (11) des Kraftfahrzeugs eine Ladeschaltung (10) gemäß Anspruch 13 umfasst.
